(19) **Europäisches Patentamt**

**European Patent Office**

**Office européen des brevets**

(11) Numéro de publication : **0 342 102 B1**

(12) **FASCICULE DE BREVET EUROPEEN**

(45) Date de publication du fascicule du brevet :
**02.12.92 Bulletin 92/49**

(51) Int. Cl.$^5$ : **F16C 11/00**

(21) Numéro de dépôt : **89401254.1**

(22) Date de dépôt : **03.05.89**

(54) Perfectionnements aux raccords pour câbles tendus.

(30) Priorité : **05.05.88 FR 8806046**

(43) Date de publication de la demande :
**15.11.89 Bulletin 89/46**

(45) Mention de la délivrance du brevet :
**02.12.92 Bulletin 92/49**

(84) Etats contractants désignés :
**BE CH ES GB IT LI NL**

(56) Documents cités :
**CH-A- 118 633**
**DE-C- 73 710**
**FR-A- 2 166 317**
**FR-A- 2 431 587**

(56) Documents cités :
**FR-A- 2 558 904**
**GB-A- 138 309**
**US-A- 1 449 765**
**US-A- 4 024 688**

(73) Titulaire : **FREYSSINET INTERNATIONAL (STUP)**
**52-54 rue de la Belle Feuille**
**F-92100 Boulogne (FR)**

(72) Inventeur : **De La Fuente, Carlos**
**17, rue du Sergent Bobillot**
**F-92000 Nanterre (FR)**

(74) Mandataire : **Behaghel, Pierre et al**
**CABINET PLASSERAUD 84 rue d'Amsterdam**
**F-75009 Paris (FR)**

## Description

L'invention est relative aux raccords pour câbles tendus, c'est-à-dire aux dispositifs pour raccorder mutuellement bout à bout deux tronçons de tels câbles, ces câbles étant notamment destinés à la précontrainte d'un ouvrage en béton ou au haubanage d'un pont.

Elle s'applique plus particulièrement --mais non exclusivement-- au cas où les câbles considérés sont composés de torons multiples, chaque toron étant lui-même constitué aussi bien par un fil isolé présentant une résistance élevée à la traction que par un faisceau de tels fils, généralement torsadés autour d'une âme centrale, le raccord étant alors composé d'une pluralité de raccords élémentaires affectés respectivement aux différents torons.

Pour simplifier la description qui suit, et à titre aucunement limitatif, on appellera "torons" les éléments de câble à raccorder bout à bout, que ces câbles soient composés d'un seul ou d'une pluralité de tels torons : dans ce dernier cas, qui est préféré, le raccord décrit est multiplié par un nombre égal à celui des torons constitutifs du câble considéré, certains de ces raccords étant décalés selon la direction axiale pour des raisons d'encombrement transversal et l'ensemble desdits raccords pouvant être rassemblé, avec les morceaux de torons qui en sortent, dans un même carter extérieur.

L'invention concerne plus particulièrement les cas où les deux extrémités de torons à raccorder sont solidarisées avec des manchons d'ancrage cylindriques intérieurement qui les enserrent fortement et où le raccord comprend deux demi-coquilles juxtaposées transversalement l'une contre l'autre de façon à former ensemble un boîtier de réception pour ces deux extrémités et leurs manchons, ledit boîtier comportant intérieurement deux portées annulaires propres à coopérer aux fins d'ancrage axial avec respectivement les deux manchons et étant coiffé jointivement par une bague qui assure le maintien de la juxtaposition transversale mutuelle des deux demi-coquilles.

Dans un mode de réalisation connu d'un tel raccord (voir FR-A-2 558 904), la bague de serrage qui coiffe le boîtier est unique et coiffe l'ensemble du boîtier, ce qui conduit à une grande dimension transversale hors tout, incompatible avec le raccordement d'une pluralité de torons parallèles composant un faisceau.

L'invention a pour but, entre autres, de supprimer cet inconvénient.

A cet effet, les raccords du genre en question selon l'invention sont essentiellement caractérisés en ce que le boîtier est prolongé à ses deux extrémités axiales par deux collets dont la surface annulaire extérieure présente un diamètre inférieur au diamètre extérieur du boîtier et supérieur au diamètre extérieur des manchons, en ce que chacune de ces surfaces annulaires extérieures de collet est coiffée jointivement par une bague, en ce que, soit la surface annulaire extérieure de collet, soit la face interne des bagues présente au moins localement une légère conicité de façon telle que le montage axial de la bague sur ladite surface annulaire extérieure soit exécuté à force en produisant un serrage transversal, et en ce que les portées, des manchons, avec lesquelles coopèrent les portées annulaires du boîtier, sont des faces planes frontales de ces manchons, lesdits manchons étant cylindriques extérieurement.

Il convient de rappeler ici que certaines des caractéristiques du raccord ainsi défini se retrouvent isolément dans le document US-A-1 449 765, relatif au raccordement d'une extrémité de câble qui est solidarisée avec un manchon d'extrémité après avoir été équipée d'un bague de serrage flottante en attente.

Dans des modes de réalisation préférés, on a recours en outre à l'une et/ou à l'autre des dispositions suivantes :

- les deux demi-coquilles sont appariées, étant obtenues toutes deux au cours d'un même moulage dans deux portions appariées d'un même moule, en même temps qu'un pontet de liaison facile à casser juste avant utilisation,
- les deux portées annulaires sont planes,
- les deux portées annulaires sont légèrement tronconiques, avec leur convergence orientée vers le centre du boîtier,
- la surface extérieure du boîtier est cannelée, c'est-à-dire évidée par des rainures longitudinales propres à loger des torons du même genre que ceux raccordés à l'aide dudit boîtier.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation de l'invention en se référant au dessin ci-annexé d'une manière bien entendu non limitative.

Les figures 1 et 2, de ce dessin, montrent respectivement en coupe axiale selon I-I, figure 2 et en coupe transversale selon II-II, figure 1, un raccord de câble établi selon l'invention.

La figure 3 montre une portion agrandie de la figure 1.

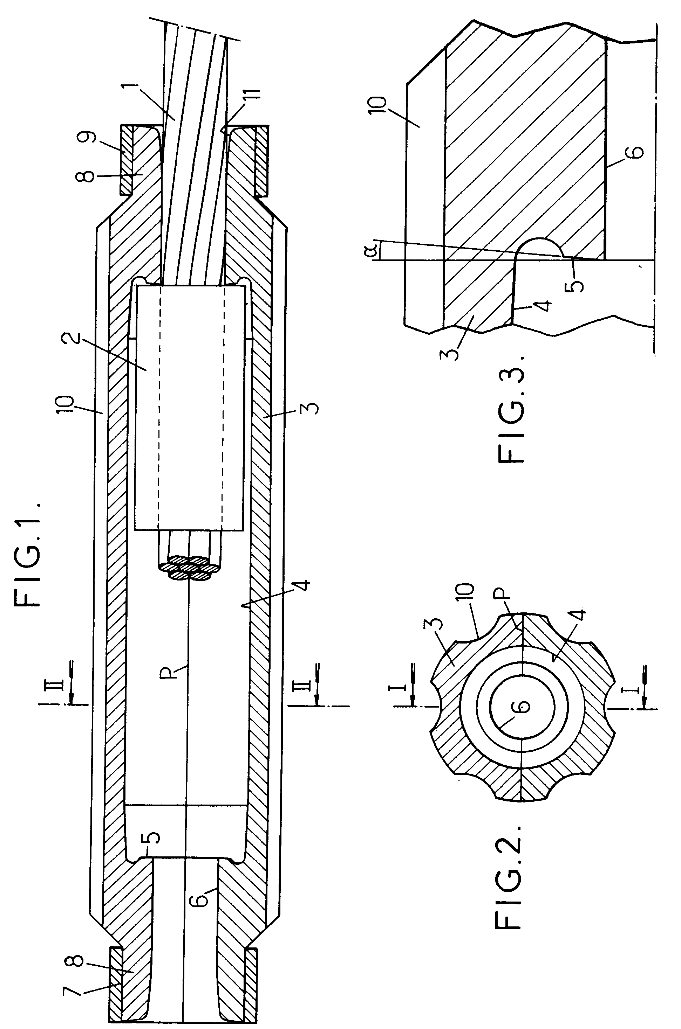

On se propose de raccorder bout à bout deux extrémités de torons 1 --dont une seule est représentée sur la figure 1-- en vue de former un toron continu destiné à être fortement tendu pour assurer notamment la précontrainte d'un ouvrage en béton ou le haubanage d'un pont suspendu.

Dans les modes de réalisation préférés, chaque toron est composé par un faisceau de fils dont le diamètre unitaire est au moins égal à 4 mm, le diamètre de chaque toron 1 est au moins égal à 10 mm, le câble à tendre est composé d'une pluralité de tels torons, le nombre de ces torons étant généralement compris entre 3 et 40, mais pouvant dépasser la centaine, et la tension globale susceptible d'être exercée sur le câble est supérieure à 5 tonnes et généralement supérieure à 10 tonnes.

D'une façon connue en soi, on fixe sur chaque extrémité un manchon 2 cylindrique intérieurement et extérieurement qui enserre fortement cette extrémité.

Le raccordement recherché revient alors à réunir les deux manchons 2 et on les loge à cet effet très simplement selon l'invention dans un même boîtier formé de deux demi-coquilles 3 symétriques l'une de l'autre par rapport à un plan axial P, c'est-à-dire contenant l'axe X des manchons 2, et juxtaposables transversalement selon ce plan P.

Chaque demi-coquille 3 est constituée en un matériau rigide et mécaniquement résistant tel qu'une fonte malléable.

Les deux demi-coquilles 3 sont de préférence appariées, étant fabriquées toutes les deux au cours d'une même opération de moulage dans deux portions appariées d'un même moule, en même temps qu'un pontet de liaison mutuelle facile à casser juste avant utilisation : ce pontet présente avantageusement à cet effet deux portions amincies, et donc fragiles, au ras des deux demi-coquilles qu'il réunit provisoirement.

Chaque demi-coquille 3 comprend un berceau central 4 à fond semi-cylindrique de révolution propre à recevoir les deux manchons 2 et délimité axialement par deux portées transversales semi-annulaires 5 propres à coopérer aux fins d'ancrage axial avec les manchons qui prennent appui sur elles.

Chaque portée 5 peut être plane.

Mais dans des modes de réalisation préférés, on donne à chaque portée 5 une forme très légèrement tronconique ainsi que visible sur la figure 1, la convergence de la conicité étant orientée vers le centre du raccord et l'angle au sommet du cône correspondant étant très voisin d'un angle plat : cet angle est par exemple de l'ordre de 150°, ce qui correspond à une inclinaison de 15° de chaque génératrice du cône considéré sur un plan transversal, ainsi que visible en α sur la figure 3.

Ladite conicité présente l'avantage suivant.

Si la portée 5 de l'une des demi-coquilles 3 est décalée axialement par rapport à l'autre, ce défaut se traduit, lors de la mise en traction axiale du câble 1 destiné à être accroché sur les portées considérées, par une sorte de matage ou écrasement de la crête de la portée tronconique en saillie par la portée plane transversale du manchon 2 correspondant jusqu'à ce que cette portée plane vienne en contact avec l'autre portée tronconique.

En outre la conicité signalée permet de transformer les tractions axiales mentionnées en des efforts de rapprochement transversal mutuel des deux demi-coquilles.

Le berceau 4 est raccordé axialement à deux embouts rétrécis ou collets 6 délimités intérieurement par une rigole 7 à profil semi-cylindrique propre à recevoir jointivement un toron 1 et extérieurement par une portée 8 semi-annulaire propre à servir de siège pour le montage à force axial sur elle d'une bague de montage 9.

Pour assurer une certaine irréversibilité de ce montage, ladite portée 8 présente avantageusement, au moins localement, une forme légèrement tronconique dont la convergence est orientée axialement vers l'extérieur du raccord.

Pour mettre en oeuvre un raccord du genre ci-dessus, on procède comme suit.

On suppose qu'au départ chacune des deux extrémités de toron 1 à raccorder a été solidarisée avec un manchon cylindrique d'ancrage 2 de toute manière désirable connue.

On enfile alors une bague 9 sur chacune de ces extrémités, au-delà du manchon 2 correspondant.

Puis on place transversalement chaque manchon 2 dans le berceau 4 d'une demi-coquille 3 ouverte, c'est-à-dire séparée de la demi-coquille symétrique, en plaçant la tranche de ce manchon 2 contre la portée 5 correspondante.

On ferme ensuite la demi-coquille ainsi garnie en rapportant transversalement sur elle l'autre demi-coquille jusqu'à juxtaposition mutuelle des deux demi-coquilles selon le plan P, ce qui forme la coquille complète ou boîtier.

On assure enfin l'irréversibilité de cette fermeture en emmanchant à force les deux bagues 9 sur les deux collets 6 du boîtier ainsi formé.

Ledit boîtier est ainsi fermement fermé avec les deux manchons 2 emprisonnés dans celui-ci ; le raccord est donc établi et il est possible d'exercer sur chacun des torons 1 sortant du boîtier une tension élevée : cette tension est transmise d'un toron à l'autre par l'intermédiaire des manchons 2, des portées 5 et du boîtier 3 lui-même, dont la résistance à la traction est bien entendu choisie de façon à être au moins égale à celle des torons.

On voit sur le dessin deux caractéristiques constructives qui facilitent le raccord individuel, à l'aide de coquilles ou boîtiers du genre ci-dessus décrit, des brins ou torons multiples parallèles composant un même câble tendu :

- des cannelures ou gorges longitudinales 10 sont évidées dans la face extérieure de chaque coquille 3 pour recevoir les brins ou torons 1 voisins de celui prolongé à l'aide de ladite coquille, les coquilles utilisées pour raccorder les brins voisins étant décalées axialement par rapport à la coquille considérée pour réduire l'encombrement transversal global, l'ensemble des coquilles pouvant être réparti en deux ou trois groupes successifs décalés axialement les uns des autres,

- des évasements 11 sont prévus aux sorties des collets 8 pour faciliter les légers changements d'orientation des torons 1 à leur sortie de ces collets, en vue par exemple de leur regroupement en un faisceau de torons parallèles juxtaposés côte à côte à une petite distance des zones de raccordement, distance qui peut être de l'ordre de 30 cm à 1 m, lesdites zones pouvant elle-même être contenues dans un carter commun (non représenté).

En suite de quoi, et quel que soit le mode de réalisation adopté, on dispose finalement d'un raccord de câble tendu dont la constitution et la mise en oeuvre résultent suffisamment de ce qui précède.

Ce raccord présente de nombreux avantages par rapport à ceux antérieurement connus, notamment les suivants :

- la fabrication est simplifiée : en particulier, les demi-coquilles ne présentent plus aucun filetage,
- le raccord est très robuste, même pour un poids de métal faible, vu que les efforts à vaincre par les bagues de montage pour fermer le boîtier et pour le maintenir fermé sont eux-mêmes très faibles, la tension exercée sur les torons n'exerçant sur le raccord aucun effort radial vers l'extérieur,
- le prix de revient est très faible,
- la mise en oeuvre est particulièrement simple.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

- celles où l'effet d'emmanchement à force des bagues 9 sur les collets 8 serait obtenu non pas par coopération de portées inclinées externes des collets avec des faces cylindriques internes des bagues, mais par coopération de faces inclinées internes des bagues avec des portées annulaires des collets de tout profil désirable,
- celles où l'application mutuelle des deux demi-coquilles serait réalisée le long d'une surface autre que plane, ladite surface comprenant par exemple des épaulements ou redans pour faciliter le positionnement relatif de ces demi-coquilles,
- et celles où chaque bague de montage comprendrait deux fentes en baïonnette propres à coopérer respectivement avec deux ergots diamétralement opposés prévus sur le collet qu'elle coiffe, de façon à assurer un verrouillage à la fois efficace et réversible du montage de chaque bague sur son collet.

chons d'ancrage (2)cylindriques intérieurement qui les enserrent fortement, comprenant deux demi-coquilles (3) juxtaposées transversalement l'une contre l'autre de façon à former ensemble un boîtier de réception pour ces deux extrémités et leurs manchons, ledit boîtier comportant intérieurement deux portées annulaires (5) propres à coopérer aux fins d'ancrage axial avec respectivement les deux manchons (2) et étant coiffé jointivement par une bague (9) qui assure le maintien de la juxtaposition transversale mutuelle des deux demi-coquilles, caractérisé en ce que le boîtier (3) est prolongé à ses deux extrémités axiales par deux collets (8) dont la surface annulaire extérieure présente un diamètre inférieur au diamètre extérieur du boîtier et supérieur au diamètre extérieur des manchons (2), en ce que chacune de ces surfaces annulaires extérieures de collet est coiffée jointivement par une bague (9),en ce que, soit la surface annulaire extérieure de collet, soit la face interne des bagues présente au moins localement une légère conicité de façon telle que le montage axial de la bague sur ladite surface annulaire extérieure soit exécuté à force en produisant un serrage transversal, et en ce que les portées, des manchons (2), avec lesquelles coopèrent les portées annulaires (5) du boîtier, sont des faces planes frontales de ces manchons, lesdits manchons étant cylindriques extérieurement.

2. Raccord selon la revendication 1, caractérisé en ce que les deux demi-coquilles (3) sont appariées, étant obtenues toutes deux au cours d'un même moulage dans deux portions appariées d'un même moule, en même temps qu'un pontet de liaison facile à casser juste avant utilisation.

3. Raccord selon l'une quelconque des précédentes revendications, caractérisé en ce que les deux portées annulaires (5) du boîtier (3) sont planes.

4. Raccord selon l'une quelconque des revendications 1 et 2, caractérisé en ce que les deux portées annulaires (5) du boîtier (3) sont légèrement tronconiques, avec leur convergence orientée vers le centre du boîtier.

5. Raccord selon l'une quelconque des précédentes revendications, caractérisé en ce que la surface extérieure du boîtier (3) est cannelée, c'est-à-dire évidée par des rainures longitudinales (10) propres à loger des torons du même genre que ceux (1) raccordés à l'aide dudit boîtier.

Revendications

1. Raccord pour réunir bout à bout deux extrémités de torons (1) tendus solidarisées avec des man-

Patentansprüche

1. Verbindungskonstruktion zum aneinanderstoßenden Verbinden zweier Enden von gespannten Litzen (1), die mit im inneren zylindrischen, die Litzenenden fest einzwängenden Verankerungshülsen (2) verbunden sind, umfassend: zwei Halbschalen (3), die seitlich derart gegeneinander gelegt sind, daß sie zusammen ein Aufnahmegehäuse für die beiden Enden und ihre Hülsen bilden, wobei das Gehäuse im Inneren zwei ringförmige Anlageflächen (5) aufweist, welche dazu geeignet sind, an den Enden der axialen Verankerung jeweils mit den beiden Hülsen (2) zusammenzuwirken, und wobei das Gehäuse durch einen Ring (9) anliegend überdeckt ist, der die Aufrechterhaltung des gegenseitigen, seitlichen Aneinanderliegens der zwei Halbschalen gewährleistet, **dadurch gekennzeichnet**, daß das Gehäuse (3) an seinen zwei axialen Enden durch zwei Hälse (8) verlängert ist, deren ringförmige äußere Oberfläche einen Durchmesser aufweist, der kleiner als der Außendurchmesser des Gehäuses und größer als der Außendurchmesser der Hülsen (2) ist, daß jede der ringförmigen äußeren Halsoberflächen anliegend durch einen Ring (9) überdeckt ist, daß entweder die ringförmige äußere Halsoberfläche oder die innere Oberfläche der Ringe wenigstens bereichsweise derart leicht verjüngt ist, daß das axiale Anbringen des Rings auf die ringförmige äußere Oberfläche mit Kraft durchgeführt werden muß, wodurch ein quer gerichtetes Festklemmen erzeugt wird, und daß die mit den ringförmigen Anlageflächen (5) des Gehäuses zusammenwirkenden Anlageflächen der Hülsen (2) ebene Stirnflächen der äußerlich zylindrischen Hülsen sind.

2. Verbindungskonstruktion nach Anspruch 1, dadurch gekennzeichnet, daß die beiden Halbschalen (3) paarweise zusammenpassend ausgebildet sind, indem beide während ein und desselben Formvorgangs, insbesondere Gießvorgangs, in zwei paarweise zusammenpassenden Formteilen ein und derselben Form gleichzeitig mit einem kurz vor der Benutzung einfach zu brechenden Verbindungssteg erhalten werden.

3. Verbindungskonstruktion nach einem der vorhergehenden Ansprüche, dadurch gekennzeichnet, daß die zwei ringförmigen Anlageflächen (5) des Gehäuses (3) eben sind.

4. Verbindungskonstruktion nach einem der Ansprüche 1 und 2, dadurch gekennzeichnet, daß die zwei ringförmigen Anlageflächen (5) des Gehäuses (3) leicht kegelstumpfförmig ausgebildet sind, wobei sie sich in Richtung auf die Gehäusemitte zu verjüngen.

5. Verbindungskonstruktion nach einem der vorhergehenden Ansprüche, dadurch gekennzeichnet, daß die äußere Oberfläche des Gehäuses (3) gerillt ist, d.h. durch längliche Ausnehmungen (10) ausgekehlt ist, welche Litzen der gleichen Art, wie die mit Hilfe des Gehäuses verbundenen (1), aufnehmen können.

## Claims

1. Coupling for connecting end to end two ends of tensioned cables strands (1) joined with internally cylindrical anchoring sleeves (2) which grip them tighly, comprising two half-shells (3) juxtaposed transversely one against the other so as to form together a housing for these two ends and their sleeves, the said housing having internally two annular bearing surfaces (5) suitable for interacting, for the purpose of axial anchoring, respectively with the two sleeves (2) and being capped contiguously by a ring (9) which maintains the mutual transverse juxtaposition of the two half-shells, characterised in that the housing (3) is extended at its two axial ends by two necks (8) whose external annular surface has a diameter less than the external diameter of the housing and greater than the external diameter of the sleeves (2), in that each of these external annular neck surfaces is capped contiguously by a ring (9), in that either the external annular neck surface or the internal face of the rings has at least locally a slight taper so that the axial mounting of the ring on the said external annular surface is carried out by force, producing a transverse gripping, and in that the bearing surfaces on the sleeves (2), with which the annular bearing surfaces (5) on the housing interact, are plane front faces on these sleeves, the said sleeves being cylindrical externally.

2. Coupling according to Claim 1, characterised in that the two half-shells (3) are matching, both being obtained during the same casting in two matching portions of the same mould, at the same time as a connecting strip which can easily be broken just before use.

3. Coupling according to either of the preceding claims, characterised in that the two annular bearing surfaces (5) of the housing (3) are plane.

4. Coupling according to either of Claims 1 or 2, characterised in that the two annular bearing surfaces (5) of the housing (3) are slightly tapered, with their convergence oriented towards the centre of the housing.

5. Coupling according to any one of the preceding claims, characterised in that the external surface of the housing (3) is ribbed, that is to say hollowed out by longitudinal grooves (10) suitable for housing strands of the same type as those (1) connected by means of the said housing.

FIG.1.

FIG.2.

FIG.3.